# EUROPÄISCHE PATENTSCHRIFT

(11) **EP 0 935 087 B1**
(45) Veröffentlichungstag und Bekanntmachung des Hinweises auf die Patenterteilung: **11.04.2001**
(21) Anmeldenummer: 98121440.6
(22) Anmeldetag: 11.11.1998
(51) Int. Cl.: F16L 25/00, F16L 37/084, F16L 37/00, F16L 5/02, H02G 3/06

(54) **Anschlussarmatur mit vorstehendem Befestigungsvorsprung**
Connecting device with anchoring protrusion
Dispositif de raccordement avec une partie saillante d'anchrage

(30) Priorität: 06.02.1998 DE 19804719
(43) Veröffentlichungstag der Anmeldung: 11.08.1999
(73) Patentinhaber: Anton Hummel Verwaltungs-GmbH, D-79183 Waldkirch (DE)
(72) Erfinder: Bartholomä, Mario, 79297 Winden (DE); Götz, Volker, 79341 Kenzingen (DE); Zügel, Fritz, 79183 Waldkirch (DE); Adolf, Jürgen, 79211 Denzlingen (DE)
(74) Vertreter: Schmitt, Hans, Dipl.-Ing.

(56) Entgegenhaltungen:
- DE-A- 19 647 013
- US-A- 5 068 496
- US-A- 5 204 499

## Beschreibung

Die Erfindung betrifft eine Anschlußarmatur zum Befestigen von länglichen Körpern, beispielsweise von Schläuchen, Wellschläuchen, Rohren, Kabeln oder dergleichen, an einer Öffnung, insbesondere an einem Durchbruch oder einer Lochung, zum Beispiel in einer Wandung eines Gehäuses oder dergleichen, wobei die Anschlußarmatur einen in Einsteckrichtung axial vorstehenden Befestigungsvorsprung aufweist, der durch im wesentlichen in axialer Richtung verlaufende Schlitze in Haltezungen aufgeteilt ist, an deren Außenseite zumindest in Gebrauchsstellung etwa radial nach außen vorstehende Haltevorsprünge angeordnet sind, wobei die Haltezungen beim Einschieben des Befestigungsvorsprunges in die Öffnung, den Durchbruch oder dergleichen Lochung hinter dem Rand der Öffnung in die Halteposition gelangen, in welcher sie diesen Rand zumindest teilweise hintergreifen, wobei mit Abstand zu den Haltevorsprüngen wenigstens ein Anschlag angeordnet ist, der in Gebrauchsstellung an dem dem hintergriffenen Rand der Öffnung gegenüberliegenden Öffnungsrand anliegt.

Eine derartige Anschlußarmatur ist beispielsweise aus der US-Patentschrift 5 068 496 bekannt. Um dabei verschiedene Dicken oder Stärken der Wandung des Gehäuses bzw. unterschiedliche Abstände der beidseitigen Ränder der Öffnung ausgleichen zu können, ist an der Anschlußarmatur eine Überwurfmutter außenseitig verschraubbar und dadurch axial verstellbar vorgesehen, deren der Gehäusewandung zugewandte Stirnseite einen verstellbaren Anschlag bildet. Je nach Dicke oder Stärke der Wandung kann diese Überwurfmutter mehr oder weniger weit in axialer Richtung durch die Schraubbewegung verstellt werden, so daß dadurch die Öffnungsränder einerseits zwischen den Haltevorsprüngen des Befestigungsvorsprunges und andererseits dieser Überwurfmutter eingespannt werden. Dies stellt eine relativ aufwendige Konstruktion sowohl hinsichtlich Herstellung als auch Montage dar. Die eigentliche Anschlußarmatur benötigt dabei nämlich außenseitig ein Gewinde und darüber hinaus die auf diesem Gewinde verschraubbare Überwurfmutter und ferner ist bei der Montage die entsprechende Einstellung dieser Überwurfmutter in die richtige Lage erforderlich.

Es besteht deshalb die Aufgabe, eine Anschlußarmatur der eingangs genannten Art zu schaffen, die ebenfalls an Öffnungen, Lochungen oder Durchbrüchen von Gehäusewandungen mit unterschiedlichen Wandstärken anbringbar ist, ohne daß ein außenseitiges Gewinde und eine Verschraubung erforderlich sind.

Die Lösung dieser scheinbar widersprüchlichen Aufgabe besteht darin, daß der Anschlag ein elastischer oder gummielastischer Ring ist, der auf einer sich von innen nach außen schräg von der Öffnung weg erweiternden Fläche der Anschlußarmatur abgestützt und unter elastischer Vergrößerung seines Durchmessers gegen seine Rückstellkraft auf dieser schrägen Fläche in axialer Richtung bewegbar oder verschiebbar ist. Der Anschlag ist also durch die Kombination der sich in Gebrauchsstellung schräg von der Öffnung weg erweiternden Fläche mit dem zwischen der Gehäusewandung und dieser schrägen Fläche angeordneten elastischen Ring gebildet. Je dicker die Gehäusewandung ist, um so mehr wird der Ring auf der schrägen Fläche beim axialen Einstecken des Befestigungsvorsprunges zurückgedrängt und dabei gleichzeitig hinsichtlich seines Umfanges gegen seine elastische Rückstellkraft aufgeweitet. Gleichzeitig kann er dabei auch in axialer Richtung noch etwas gegen seine Elastizität und Rückstellkraft zusammengedrückt werden. Da ein gummielastischer Ring beim Aufweiten hinsichtlich seines eigenen Querschnittes etwas abnimmt, gleichzeitig aber der Widerstand gegen eine weitere Verformung zunimmt, entsteht ein fester Anschlag, der automatisch unterschiedliche Wandstärken ausgleicht. In besonders vorteilhafter Weise werden dabei durch diesen gummielastischen Ring gleichzeitig Unregelmäßigkeiten von Wandstärken überbrückt oder ebenfalls ausgeglichen.

Eine besonders preiswerte Anordnung ergibt sich, wenn der Widerlagerring ein O-Ring ist. Solche O-Ringe sind als handelsübliche Dichtringe sehr preiswert zu erhalten und erlauben eine gewisse Aufdehnung und Verpressung, so daß sich eine sehr preiswerte Lösung ergibt. Darüber hinaus ist ein solcher O-Ring aus einem gummielastischen Werkstoff gefertigt, kann also entsprechend gut verformt und angepaßt werden und übertrifft dadurch einen beispielsweise aus einer oder mehreren Drahtwindungen bestehenden Ring. Ferner läßt sich ein solcher O-Ring aufgrund des runden oder kreisrunden Querschnittes - quer oder radial zu seinem Umfang verlaufend - besonders gut auf einer schrägen Fläche oder Stützfläche in axialer Richtung unter gleichzeitiger Aufweitung seines Umfanges verschieben. Dabei bleibt der von ihm gebildete Anschlagringbereich, von der Durchmesservergrößerung abgesehen, praktisch unverändert.

Die schräge Stützfläche für den Widerlagerring kann geradlinige und/oder gekrümmte Mantellinien aufweisen, so daß sie einen Kegelstumpf bildet, der gegebenenfalls zumindest bereichsweise konvex und/oder konkav ist.

Hat die Stützfläche insgesamt die Form eine Kegelstumpfes, ergibt sich eine gleichbleibende Aufweitung des Widerlagerringes bei seiner axialen Verstellung. Durch teils geradlinige, teils gekrümmte Mantellinien, die dabei eine ballige oder eine eingesenkte Fläche bilden können, kann jedoch die Stützfläche so gestaltet sein, daß die Aufweitung des Widerlagerringes bei zunehmender Wandstärke der Gehäusewandung über- oder unterproportional verläuft, zum Beispiel abhängig von der Elastizität des Werkstoffes des Widerlagerringes. Beispielsweise könnte die Stützfläche etwas ballig gekrümmt sein, so daß ihr Schrägungswinkel in axialer Richtung bei zunehmendem Radius immer geringer wird, also der Widerlagerring bei größeren Wandstärken immer weniger aufgeweitet werden muß, um die gewünschte Anpassung zu ermöglichen.

Die Innenlängshöhlung der Anschlußarmatur kann bis in den Befestigungsvorsprung oder durch diesen hindurch fortgesetzt sein und der längliche Körper kann in Gebrauchsstellung bis zwischen die Haltezungen reichen und/oder gegenüber diesen Haltezungen axial überstehen. Bei einer solchen Gestaltung bewirkt der längliche Körper in Gebrauchsstellung eine Fixierung der Haltezungen in ihrer Halte- und Rastposition, verriegelt also die Anschlußarmatur gegen ein ungewolltes Lösen, was zum Beispiel dann zweckmäßig ist, wenn die Anschlußarmatur und das sie aufnehmende Gehäuse dynamischen Belastungen unterliegen.

Insgesamt ergibt sich eine Anschlußarmatur, die sehr einfach in ihrem Aufbau ist, weil die Anpassung an unterschiedliche Wandstärken durch einen gummielastischen Anschlagring praktisch automatisch erfolgen kann, wobei ein besonderer zusätzlicher Vorteil darin besteht, daß der Anschlagring gleichzeitig eine Abdichtung der Armatur gegenüber der Gehäuseöffnung ergibt. Auf diese Weise erhält der Anschlagring eine Doppelfunktion, weil er einerseits die Dickenanpassung erlaubt und dabei gleichzeitig eine Dichtwirkung ausübt.

Nachstehend sind Ausführungsbeispiele der Erfindung anhand der Zeichnung näher beschrieben. Es zeigt in zum Teil schematisierter Darstellung:
- Fig. 1: eine zur Hälfte im Längsschnitt und zur anderen Hälfte in Seitenansicht dargestellte Anschlußarmatur gemäß der Erfindung vor ihrer Befestigung an einer mit einer Öffnung versehenen Gehäusewandung und vor dem Einfügen und Fixieren eines Wellschlauches,
- Fig. 2: eine der Fig.1 entsprechende Darstellung der Anschlußarmatur in Gebrauchsstellung, das heißt nach dem Einstecken in eine Öffnung einer Gehäusewandung oder dergleichen und nach dem Befestigen eines länglichen Körpers in Form eines Wellschlauches an und in dieser Anschlußarmatur sowie
- Fig. 3: eine abgewandelte Ausführungsform einer an einer Öffnung einer Gehäusewandung bereitseingesteckten und festgelegten Anschlußarmatur, in welche ein länglicher Körper in Form eines Wellschlauches noch zu seiner Befestigung einsteckbar ist.

Bei den nachfolgend beschriebenen Ausführungsbeispielen erhalten hinsichtlich ihrer Funktion übereinstimmende oder ähnliche Teile übereinstimmende Bezugszahlen.

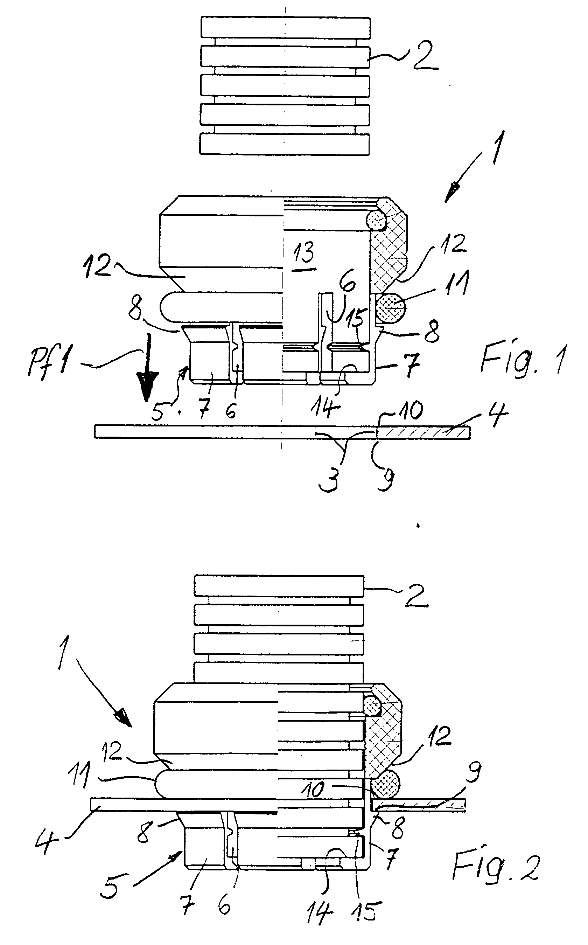

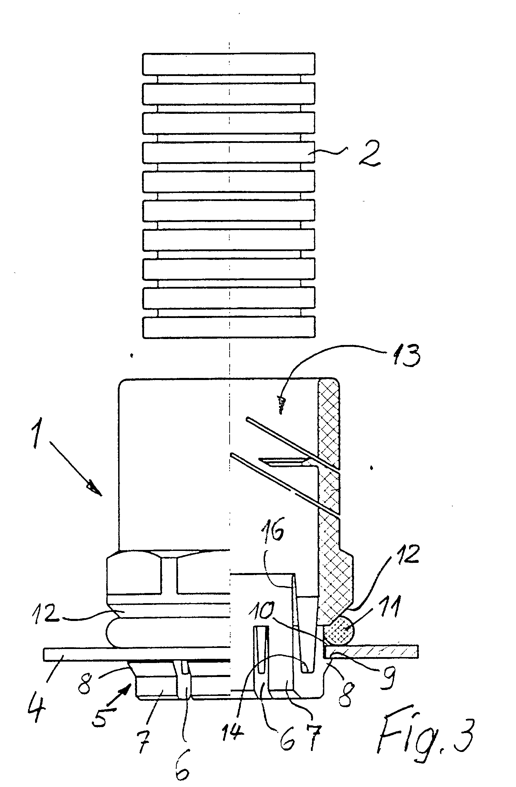

Eine im ganzen mit 1 bezeichnete, besonders gut in Fig.1, aber auch in Fig.3 in abgewandelter Form erkennbare Anschlußarmatur dient zum Befestigen von länglichen Körpern, im Ausführungsbeispiel zum Befestigen eines Wellschlauches 2, an einer Öffnung 3, zum Beispiel an einem Durchbruch oder einer Lochung in einer Wandung 4 beispielsweise eines Gehäuses oder dergleichen.

Die Anschlußarmatur 1 weist dabei einen in der durch den Pfeil Pf1 in Fig.1 angedeuteten Einsteckrichtung axial vorstehenden Befestigungsvorsprung 5 auf, der durch im wesentlichen in axialer Richtung verlaufende Schlitze 6 in Haltezungen 7 aufgeteilt ist, an deren Außenseite radial nach außen vorstehende Haltevorsprünge 8 angeordnet sind, die beim Einschieben des Befestigungsvorsprunges 5 und damit der Haltezungen 7 in die Öffnung 3 gemäß Fig.2 und 3 hinter den Rand 9 dieser Lochung 3 in Halteposition gelangen, in welcher die Haltevorsprünge 8 diesen Rand 9 hintergreifen. Sie haben dabei im Ausführungsbeispiel einen etwa sägezahnartigen Querschnitt, das heißt entgegen der Einsteckrichtung nimmt ihre Höhe allmählich bis zu ihrer größten radialen Abmessung zu, um dann relativ steil bzw. in einer radialen Ebene liegend abzufallen, wobei dieser steile Abfall mit dem Lochungsrand 9 in Gebrauchsstellung in Wirkverbindung ist.

Mit Abstand zu den Haltevorsprüngen 8 und deren steiler Anschlagfläche ist ein noch näher zu beschreibender Anschlag angeordnet, der in Gebrauchsstellung an dem dem hintergriffenen Rand 9 der Öffnung 3 gegenüberliegenden Öffnungsrand 10 anliegt, wie es die Figuren 2 und 3 zeigen.

Der Anschlag ist dabei gemäß Fig.2 und 3, soweit es die unmittelbare Anlage an dem Öffnungsrand 10 betrifft, ein gummielastischer Ring 11, der auf einer sich von innen nach außen schräg von der Öffnung 3 weg erweiternden Fläche 12 der Anschlußarmatur 1 abstützt. Der Anschlag wird also insgesamt von dieser Schrägfläche 12 und dem daran anliegenden Ring 11 gebildet. Gegenüber einer Ausgangsstellung gemäß Fig.1 ist aufgrund dieser Anordnung der Ring 11 unter eventueller Vergrößerung seines Durchmessers gegen eine Rückstellkraft auf dieser schrägen Fläche 12 zusammendrückbar und in axialer Richtung etwas verschiebbar.

Gegenüber den Darstellungen gemäß Fig. 2 und 3 wird eine solche axiale stärkere Verstellung des Widerlagerringes 11 dann erfolgen, wenn die Dicke der Wandung 4 größer ist, so daß also aufgrund der Elastizität des Ringes 11 und der Schrägfläche 12, deren kleinster Durchmesser etwas in den Ring 11 eingreifen kann, eine Anpassung an unterschiedliche Dicken oder Stärken der Wand 4 selbsttätig möglich ist. Ist die Wand 4 etwas dicker, muß die Anschlußarmatur 1 nur mit etwas größerer Kraft in die Öffnung 3 eingesteckt werden, bis die Haltevorsprünge 8 hinter den zu hintergreifenden Rand 9 gelangen und dort verrastet werden, wobei dann der Ring 11 entsprechend stärker verformt und aufgrund der Schrägfläche 12 unter Umständen auch etwas aufgeweitet wird, wenn er nämlich auf dieser Schrägfläche 12 etwas axial verschoben wird.

Einer besonderen Schraubhülse oder dergleichen als Gegenanschlag und zur Einstellung der Wanddicke ist also nicht erforderlich.

Im Ausführungsbeispiel ist der Widerlagerring 11 ein O-Ring, der preiswert in nahezu beliebigen Größen erhältlich ist und zusätzlich zu der automatischen Anpassung an unterschiedliche Wandstärken gleichzeitig auch eine Abdichtung der Anschlußarmatur im Bereich der Öffnung 3 an dieser Wandung ergibt. Somit hat dieser Ring 11 eine vorteilhafte Doppelfunktion.

Die schräge Stützfläche 12 weist im Ausführungsbeispiel geradlinige Mantellinien auf, so daß sie also einen Kegelstumpf bildet. Gegebenenfalls könnte sie jedoch auch zumindest bereichsweise konvex oder konkav gestaltet sein, um die Aufweitung des Anschlagringes 11 je nach Wanddicke über- oder unterproportional zu gestalten.

Die Innenlängshöhlung 13 der Anschlußarmatur setzt sich bis in den Bereich der Befestigungsvorsprünge 8 und noch darüber hinaus fort. In Gebrauchsstellung reicht der längliche Körper, also im Ausführungsbeispiel der Wellschlauch 2 also zwischen die Haltezungen 7 und verbessert dadurch deren Verankerung, weil sie auch unter dynamischen Belastungen oder unter einem Schrägzug nicht aus ihrer Rastposition zurückgezogen werden können, sondern durch den Wellschlauch 2 an einer solchen Verformung in Öffnungsrichtung gehindert werden.

Im Ausführungsbeispiel gemäß Fig.1 und 2 enthalten dabei die Haltezungen 7 an ihren Enden einen radial nach innen vorstehenden Anschlag 14, an dem der Wellschlauch 2 in Gebrauchsstellung und nach einer Verrastung mit einer innenseitigen Rippe 15 ansteht.

Im Ausführungsbeispiel gemäß Fig.3 ist ein Anschlag 13 an den Haltezungen 7 zu einer innenseitigen Stützhülse 16 verlängert, während die Verrastung mit dem Wellschlauch 2 durch eine an der Anschlußarmatur oberhalb des Ringes 11 befindlichen Verankerung 15 in an sich bekannter Weise erfolgt.

Die Anschlußarmatur 1 zum Befestigen von länglichen Körpern wie Schläuchen, Wellschläuchen 2, aber auch Rohren oder Kabeln, an einer Öffnung 3 zum Beispiel in einer Wandung 4 eines Gehäuses hat in Einsteckrichtung Pf1 einen axial vorstehenden Befestigungsvorsprung 5, der durch Schlitze 6 in Haltezungen 7 aufgeteilt ist, an deren Außenseite zumindest in Gebrauchsstellung etwa radial nach außen vorstehende Haltevorsprünge 8 angeordnet sind. Die Haltezungen 7 sind beim Einschieben des Befestigungsvorsprunges 5 in die Öffnung 3 oder dergleichen Durchbruch durch deren Rand 10 radial nach innen gegen eine Rückstellkraft verformbar und gelangen hinter dem Rand 9 in ihre Halteposition, in welcher die Haltevorsprünge 8 diesen Rand 9 hintergreifen. Mit Abstand zu den Haltevorsprüngen 8 ist ein Anschlag angeordnet, der in Gebrauchsstellung an dem dem hintergriffenen Rand 9 der Öffnung 3 gegenüberliegenden, also in Einsteckrichtung vorderen Öffnungsrand 10 anliegt. Dieser Anschlag ist ein gummielastischer Ring 11, der auf einer sich von innen nach außen schräg von der Öffnung 3 weg erweiternden Fläche 12 der Anschlußarmatur 1 abstützt und unter elastischer Verformung und/oder unter Vergrößerung seines Durchmessers gegen eine Rückstellkraft an diese Fläche 12 anpreßbar und/oder auf dieser schrägen Fläche 12 in axialer Richtung verschiebbar ist. Dabei kann dieser elastisch nachgiebige Ring 11 gleichzeitig eine Abdichtfunktion haben.

## Patentansprüche

1. Anschlußarmatur (1) zum Befestigen von länglichen Körpern, beispielsweise von Schläuchen, Wellschläuchen (2), Rohren, Kabeln oder dergleichen, an einer Öffnung (3), insbesondere an einem Durchbruch oder einer Lochung zum Beispiel in einer Wandung (4) eines Gehäuses oder dergleichen, wobei die Anschlußarmatur (1) einen in Einsteckrichtung (Pf1) axial vorstehenden Befestigungsvorsprung (5) aufweist, der durch im wesentlichen in axialer Richtung verlaufende Schlitze (6) in Haltezungen (7) aufgeteilt ist, an deren Außenseite zumindest in Gebrauchsstellung etwa radial nach außen vorstehende Haltevorsprünge (8) angeordnet sind, wobei die Haltezungen (7) beim Einschieben des Befestigungsvorsprunges (5) in die Öffnung (3), den Durchbruch oder dergleichen Lochung hinter dem Rand (9) der Öffnung (3) in die Halteposition gelangen, in welcher sie diesen Rand (9) zumindest teilweise hintergreifen, wobei mit Abstand zu den Haltevorsprüngen (8) wenigstens ein Anschlag angeordnet ist, der in Gebrauchsstellung an dem dem hintergriffenen Rand (9) der Öffnung (3) gegenüberliegenden Öffnungsrand (10) anliegt, **dadurch gekennzeichnet**, daß der Anschlag ein elastischer oder gummielastischer Ring (11) ist, der auf einer sich von innen nach außen schräg von der Öffnung (3) weg erweiternden Fläche (12) der Anschlußarmatur (1) abgestützt und unter elastischer Vergrößerung seines Durchmessers gegen seine elastische Rückstellkraft auf dieser schrägen Fläche (12) in axialer Richtung bewegbar oder verschiebbar ist.

2. Anschlußarmatur nach Anspruch 1, dadurch gekennzeichnet, daß der Widerlagerring (11) ein O-Ring ist.

3. Anschlußarmatur nach Anspruch 1 oder 2, dadurch gekennzeichnet, daß die schräge Stützfläche für den Widerlagerring (11) geradlinige und/oder gekrümmte Mantellinien aufweist, so daß sie einen Kegelstumpf bildet, der gegebenenfalls zumindest bereichsweise konvex und/oder konkav ist.

4. Anschlußarmatur nach einem der Ansprüche 1 bis 3, dadurch gekennzeichnet, daß die Innenlängshöhlung (13) der Anschlußarmatur bis in den Befestigungsvorsprung (8) oder durch diesen hindurch fortgesetzt ist und der längliche Körper in Gebrauchsstellung bis zwischen die Haltezungen (7) reicht und/oder gegenüber diesen Haltezungen (7) axial überstehen.

## Claims

1. Connecting fitting (1) for securing elongate objects, e.g. hoses, ridged hoses (2), pipes, cables or the like, to an opening (3), particularly a breach or a hole, for example in a wall (4) of a housing or the like, wherein the connecting fitting (1) has a fixing projection (5) which protrudes axially in the direction of insertion (Pf1), which is divided into retaining tongues (7) by substantially axially extending slots (6), and on the outside of which are disposed retaining projections (8) which protrude approximately radially outwardly, at least in the position of use, wherein during insertion of the fixing projection (5) into the opening (3), the breach or similar hole, the retaining tongues (7) move into the retaining position behind the edge (9) of the opening (3) in which they at least partly engage behind this edge (9), while spaced from the retaining projections (8) is at least one stop which in the position of use abuts on the edge (10) of the opening which is opposite the engaging edge (9) of the opening (3), **characterised in that** the stop is an elastic or rubber-like ring (11) which is supported on a surface (12) of the connecting fitting (1) which broadens out from the inside to the outside on a slant away from the opening (3), and is axially movable or displaceable on this inclined surface (12) counter to its elastic recoil force, while its diameter increases elastically.

2. Connecting fitting according to claim 1, characterised in that the abutment ring (11) is an O-ring.

3. Connecting fitting according to claim 1 or 2, characterised in that the slanting support surface for the abutment ring (11) has straight and/or curved generatrices, so as to form a truncated cone which is optionally convex and/or concave, at least in parts.

4. Connecting fitting according to one of claims 1 to 3, characterised in that the inner longitudinal cavity (13) of the connecting fitting is continued into the fixing projection (8) or right through it and in the position of use the elongate body extends to between the retaining tongues (7) and/or protrudes axially relative to these retaining tongues.

## Revendications

1. Dispositif de raccordement (1) pour fixer des corps allongés, par exemple des tuyaux flexibles, des tuyaux ondulés flexibles (2), des tubes, des câbles ou analogues, à une ouverture (3), notamment à un passage ou une perforation par exemple dans une paroi (4) d'un boîtier ou analogues, sachant que le dispositif de raccordement (1) présente une saillie de fixation (5) faisant saillie dans le sens d'introduction (Pf1), qui est divisée en languettes de maintien (7) par des fentes (6) s'étendant essentiellement dans la direction axiale, lesquelles languettes portent sur l'extérieur, au moins dans la position d'utilisation, des saillies de maintien (8) faisant saillie approximativement radialement vers l'extérieur, sachant qu'en introduisant la saillie de fixation (5) dans l'ouverture (3), le passage ou une perforation analogue, les languettes de maintien (7) se mettent dans la position de maintien derrière le rebord (9) de l'ouverture (3), dans laquelle elles s'enclenchent au moins partiellement derrière ce rebord (9), sachant qu'au moins une butée est disposée à distance des saillies de maintien (8), qui, en position d'utilisation, est appliquée contre le bord (10) de l'ouverture qui est opposé au rebord (9) de l'ouverture (3) derrière lequel s'enclenchent les saillies, caractérisé en ce que la butée est une bague élastique ou en caoutchouc (11) qui prend appui sur une surface (12) du dispositif de raccordement (1) s'élargissant de l'intérieur vers l'extérieur à partir de l'ouverture (3), et qui peut être déplacée ou coulissée dans la direction axiale sur cette surface inclinée (12) en élargissant son diamètre contre sa force de rappel élastique.

2. Dispositif de raccordement selon la revendication 1, caractérisé en ce que la bague de butée (11) est un joint torique d'étanchéité.

3. Dispositif de raccordement selon la revendication 1 ou 2, caractérisé en ce que la surface d'appui inclinée pour la bague de butée (11) présente des génératrices rectilignes et/ou courbées de manière à former un tronc de cône qui, le cas échéant, est au moins en partie convexe et/ou concave.

4. Dispositif de raccordement selon l'une des revendications 1 à 3, caractérisé en ce que le vide longitudinal interne (13) du dispositif de raccordement se prolonge jusque dans la saillie de fixation (8) ou au-delà de celle-ci, et en ce que le corps allongé en position d'utilisation s'étend jusqu'entre les languettes de maintien (7) et/ou fait saillie axialement par rapport à ces languettes de maintien (7).
